# EUROPÄISCHE PATENTANMELDUNG

(11) **EP 4 678 526 A1**
(43) Veröffentlichungstag der Anmeldung: **14.01.2026**
(21) Anmeldenummer: 25189237.8
(22) Anmeldetag: 14.07.2025
(51) Int. Cl.: B62K 25/28

(54) **FAHRRADRAHMEN UND FAHRRAD**

(30) Priorität: 12.07.2024 DE 202024103892 U
(71) Anmelder: Canyon Bicycles GmbH, 56073 Koblenz (DE)
(72) Erfinder: Maden, Marcelo, 56068 Koblenz (DE)
(74) Vertreter: dompatent

(57) **Zusammenfassung**

Die Erfindung betrifft einen Fahrradrahmen (10) mit einem Hauptrahmen (12), einem relativ zum Hauptrahmen (12) um einen Drehpunkt (34) beweglichen Hinterbau (14), und einem den Drehpunkt (34) ausbildenden Drehgelenk (30), wobei das Drehgelenk (30) zur Änderung der Position des Drehpunkts (34) verschiebbar ist. Ferner betrifft die Erfindung ein Fahrrad mit einem solchen Fahrradrahmen (10).

## Beschreibung

Die Erfindung betrifft einen Fahrradrahmen und ein Fahrrad.

Bekannte vollgefederte Mountainbikes verwenden verschiedene Fahrradrahmen mit Federung, wie etwa Eingelenker, Viergelenker oder Virtual Pivot Point (VPP)-Systeme. Diese Rahmentypen bieten zwar eine effektive Dämpfung von Stößen und eine Verbesserung der Traktion, jedoch kommt es zum Squat, der zu Problemen führen kann. Squat tritt auf, wenn die Kraft, die beim Pedalieren auf den Hinterbau wirkt, diesen komprimiert und somit die Effizienz des Vortriebs reduziert. Dies führt bspw. zu einem Energieverlust und kann das Fahrgefühl negativ beeinflussen.

Zur Verhinderung von unerwünschten Effekten des Squats existiert das Konzept des Anti-Squats. Hierbei wird bspw. die Kinematik und/oder Geometrie des Federungssystems so gestaltet, dass die Pedalkräfte den Hinterbau stabilisieren, anstatt ihn zu komprimieren. Der Anti-Squat wird z. B. durch eine Anpassung der Dämpfercharakteristik der Feder und/oder durch die Drehpunktposition, insbesondere die Positionierung des Drehpunkts relativ zur Kettenlinie beeinflusst.

Nachteile an bestehenden Konzepten des Anti-Squats, ergeben sich in der Abstimmung des Anti-Squat auf die Bedürfnisse des Fahrers und/oder die Fahrsituation. So ist es bspw. möglich, dass der Anti-Squat nicht oder nur aufwendig oder ungenau adaptierbar ist.

Aufgabe der Erfindung ist es, einen Fahrradrahmen und ein Fahrrad zu schaffen, wobei die Adaptierbarkeit des Anti-Squats verbessert ist.

Die Lösung der Aufgaben erfolgt erfindungsgemäß durch einen Fahrradrahmen gemäß Anspruch 1 und ein Fahrrad gemäß Anspruch 14.

Bei dem erfindungsgemäßen Fahrradrahmen handelt es sich insbesondere um einen vollgefederten Fahrradrahmen. Vorzugsweise handelt es sich um einen Mountainbike-Rahmen. Bspw. handelt es sich bei dem Fahrradrahmen um einen Eingelenker, einen Viergelenker, insbesondere Horst-Link, einen Dual-Link-Rahmen, einen Sechsgelenker oder einen Virtual Pivot Point (VPP)-Rahmen. Der Fahrradrahmen weist einen Hauptrahmen und einen relativ zum Hauptrahmen, um einen Drehpunkt beweglichen, Hinterbau auf. Bei dem Drehpunkt handelt es sich insbesondere um einen physischen oder virtuellen Drehpunkt. Vorzugsweise entspricht der Drehpunkt einer, vorzugsweise physischen oder virtuellen, Drehachse. Ferner weist der Fahrradrahmen ein den Drehpunkt ausbildendes Drehgelenk auf. Das Drehgelenk ist vorzugsweise unmittelbar mit dem Hauptrahmen, bspw. einem Sitzrohr des Hauptrahmens und/oder unmittelbar mit dem Hinterbau, bspw. einer Kettenstrebe des Hinterbaus, verbunden. Vorzugsweise ist das Drehgelenk ausgeführt den Hauptrahmen und den Hinterbau drehbar relativ zueinander anzuordnen. Es ist bevorzugt, dass das Drehgelenk einen Freiheitsgrad von 1 aufweist, wobei es sich insbesondere um einen rotatorischen Freiheitsgrad handelt. Das Drehgelenk ist zur Änderung der Position des Drehpunkts und somit bevorzugt zur Beeinflussung, besonders bevorzugt zur Einstellung des Anti-Squats, verschiebbar. Vorteilhaft ist durch die Änderung der Position des Drehpunkts durch das verschiebbare Drehgelenk der Anti-Squat individualisierbar, bspw. auf die Bedürfnisse des Fahrers und/oder bzgl. der Fahrsituation. Insbesondere ist das Drehgelenk derart verschiebbar und damit die Position des Drehpunkts änderbar, dass das Moment, das eine Kette eines den Fahrradrahmen aufweisenden Fahrrads unter Tretlast auf den Hinterbau ausübt, verändert wird und damit den Anti-Squat des Fahrrads verändert. Vorzugsweise ist das Drehgelenk derart verschiebbar und damit insbesondere die die Position des Drehpunkts änderbar, dass dies keine Wesentlichen Auswirkungen auf die statische Geometrie, vorzugsweise im unbelasteten Zustand, bspw. bei 0% Federweg, des Fahrrads hat und/oder dies die Kurve des Federwegs und/oder des Bewegungsverhältnisses des Fahrrads nicht oder nur geringfügig beeinflusst. Durch das verschiebbare Drehgelenk und damit änderbare Position des Drehpunkts ist es neben dem einstellbaren Anti-Squat insbesondere vorteilhaft möglich den Anti-Squat bzgl. verschiedenen Kettenblattgrößen zu adaptieren, vorzugsweise über verschiedene Kettenblattgrößen hinweg konsistent zu halten. Insbesondere ist das Drehgelenk und/oder der Drehpunkt translatorisch in einem Bereich von 1 mm bis 100 mm, bevorzugt von 3 bis 50 mm, besonders bevorzugt von 4 bis 30 mm verschiebbar.

Es ist bevorzugt, dass das Drehgelenk translatorisch verschiebbar ist. Insbesondere ist das Drehgelenk in einer Höhenrichtung des Fahrradrahmens verschiebbar.

Es ist bevorzugt, dass das Drehgelenk relativ zum Hauptrahmen, insbesondere translatorisch, verschiebbar ist. Bevorzugt ist das Drehgelenk in einer Erstreckungsrichtung, insbesondere Längsrichtung, eines Sitzrohrs des Fahrradrahmens verschiebbar. Vorzugsweise ist das Drehgelenk parallel zum Sitzrohr verschiebbar.

Es ist bevorzugt, dass das Drehgelenk in verschiedenen Positionen relativ zum Hauptrahmen, insbesondere translatorisch, fixierbar ist. Vorzugsweise ist das Drehgelenk mittels eines Flip-Chips in den verschiedenen Positionen fixierbar.

Es ist bevorzugt, dass das Drehgelenk, zumindest teilweise, verschiebbar im Hauptrahmen aufgenommen ist. Insbesondere ist das Drehgelenk verschiebbar in einem Sitzrohr des Hauptrahmens aufgenommen.

Es ist bevorzugt, dass der Hauptrahmen eine Öffnung, insbesondere Bohrung zur verschiebbaren Aufnahme des Drehgelenks aufweist. Die Öffnung nimmt insbesondere eine Drehachse des Drehgelenks auf. Der Durchmesser der Öffnung ist insbesondere größer als der Durchmesser der Drehachse, sodass die Drehachse in der Öffnung verschiebbar ist. Bei der Öffnung handelt es sich vorzugsweise um ein Langloch. Das Langloch erstreckt sich insbesondere in Längsrichtung des Sitzrohrs und insbesondere parallel zum Sitzrohr.

Es ist bevorzugt, dass das Drehgelenk eine Drehachse aufweist, wobei die Drehachse verschiebbar ist. Die erfindungsgemäße Verschiebbarkeit des Drehgelenks wird insbesondere durch eine Verschiebbarkeit der Drehachse umgesetzt. Bei der Drehachse handelt es sich vorzugsweise um eine physische Drehachse, bevorzugt um einen Stift. Die Drehachse bildet insbesondere den Drehpunkt aus. Vorzugsweise rotiert der Hinterbau um die Drehachse. Es ist bevorzugt, dass der Drehpunkt deckungsgleich mit einer Drehachse ist. Die Drehachse, insbesondere der Stift, ist insbesondere verschiebbar im Hauptrahmen angeordnet. Vorzugsweise erstreckt sich die Drehachse, insbesondere vollständig, durch den Hauptrahmen. Die Drehachse ist insbesondere drehfest mit dem Hauptrahmen verbunden. Das Drehgelenk weist insbesondere ferner mindestens ein Lager, vorzugsweise Wälzlager, auf. Das Lager ist vorzugsweise einseitig, bspw. mit einem Innenring des Lagers, mit der Drehachse und auf der anderen Seite, bspw. mit einem Außenring des Lagers, mit dem Hinterbau, insbesondere der Kettenstrebe, verbunden. Es ist bevorzugt, dass das Lager eine Rotation zwischen Hauptrahmen und Hinterbau zur Umsetzung der relativen Beweglichkeit zwischen Hauptrahmen und Hinterbau ermöglicht.

Es ist bevorzugt, dass es sich bei dem Drehgelenk um das Hauptdrehgelenk, auch Main Pivot genannt, des Fahrradrahmens und/oder dass es sich bei dem Drehpunkt um den Hauptdrehpunkt des Fahrradrahmens handelt.

Es ist bevorzugt, dass sich durch das Verschieben des Drehgelenks der Abstand des Drehpunkts zu einer Tretlagerachse des Fahrradrahmens ändert. Insbesondere ist das Drehgelenk derart verschiebbar ausgeführt, dass sich durch das Verschieben des Drehgelenks der Abstand des Drehpunkts zu der Tretlagerachse des Fahrradrahmens ändert.

Es ist bevorzugt, dass das Drehgelenk entlang einer Gerade verschiebbar ist, die durch ein Tretlager des Fahrradrahmens, insbesondere eine Tretlagerachse des Tretlagers verläuft.

Es ist bevorzugt, dass das Drehgelenk verschiebbar in zwei verschiedene Positionen oder in mehr als zwei verschiedene Positionen ist. Möglich ist es, dass das Drehgelenk stufenlos oder stufenweise verschiebbar, insbesondere zwischen zwei Positionen ist.

Es ist bevorzugt, dass der Fahrradrahmen ferner einen Flip-Chip, bevorzugt im Hauptrahmen, besonders bevorzugt im Sitzrohr, zum Verschieben des Drehgelenks aufweist. Der Flip-Chip ist vorzugsweise als Einsatz, insbesondere zum Einsetzen in den Hauptrahamen, ausgeführt. Der Flip-Chip ist ausgeführt das Drehgelenk in verschiedenen Positionen, bevorzugt relativ zum Hauptrahmen, translatorisch zu fixieren, vorzugsweise am und/oder im Hauptrahmen zu fixieren. Bei dem Flip-Chip gemäß der Erfindung handelt es sich insbesondere um einen exzentrischen Spacer oder einen exzentrischen Einsatz.

Es ist bevorzugt, dass der Flip-Chip ausgeführt ist die Drehachse des Drehgelenks zur Änderung der Position des Drehpunkts in verschiedenen Positionen relativ zum Hauptrahmen, bevorzugt innerhalb des Hauptrahmens, anzuordnen. Der Flip-Chip ist vorzugsweise ausgeführt die Drehachse translatorisch und/oder rotatorisch am und/oder im Hauptrahmen zu fixieren. Der Flip-Chip ist insbesondere ausgeführt durch die Verstellfunktion des Flip-Chips die Position des Drehpunkts zu ändern. Vorzugsweise ist der Flip-Chip ausgeführt durch die Verstellfunktion des Flip-Chips das Drehgelenk zu verschieben. Der Flip-Chip ist insbesondere zur verschiebbaren Aufnahme der, vorzugsweise physischen, Drehachse des Drehgelenks ausgeführt. Durch die Verstellfunktion des Flip-Chips ist insbesondere eine Anordnung der Drehachse des Drehgelenks in verschiedenen Positionen zur Änderung der Position des Drehpunkts umgesetzt. Es ist bevorzugt, dass der Flip-Chip im Hauptrahmen, insbesondere in der Öffnung des Hauptrahmens, aufgenommen ist. Der Flip-Chip ist vorzugsweise im Hauptrahmen, vorzugsweise in der Öffnung des Hauptrahmens, verstellbar, bspw. drehbar und/oder umsetzbar. Bei dem Flip-Chip handelt es sich insbesondere um einen drehbaren Flip-Chip, der bspw. um 180°, gedreht werden kann, sodass aufgrund des Drehens des Flip-Chips das Verschieben des Drehgelenks umsetzbar ist. Insbesondere handelt es sich bei dem drehbaren Flip-Chip um einen, vorzugsweise im Hauptrahmen einzusetzenden, drehbaren Einsatz. Vorzugsweise ist der Einsatz ausgeführt durch ein Umsetzen und/oder eingesetztes Rotieren das Verschieben des Drehgelenks umzusetzen. Andererseits oder zusätzlich kann es sich bei dem Flip-Chip insbesondere um einen versetzbaren Flip-Chip handeln. Der versetzbare Flip-Chip weist insbesondere mindestens eine Platte auf, die in verschiedene Positionen verschoben werden kann, um derart das Verschieben des Drehgelenks umzusetzen. Andererseits oder zusätzlich kann es sich bei dem Flip-Chip um eine umdrehbare Buchse handeln. Ferner kann es sich bei dem Flip-Chip alternativ oder zusätzlich um einen austauschbaren Flip-Chip handeln. Der austauschbare Flip-Chip weist insbesondere verschiedene austauschbare Einsätze auf, die entfernt und durch andere Chips mit verschiedenen Positionseinstellungen ersetzt werden können, um das Verschieben des Drehgelenks umzusetzen.

Insbesondere weist der Fahrradrahmen eine Feder zur Federung der Bewegung zwischen Hauptrahmen und Hinterbau auf. Zur Umsetzung der Beweglichkeit zwischen Hauptrahmen und Hinterbau weist der Fahrradrahmen neben dem Drehgelenk, insbesondere Hauptdrehgelenk, vorzugsweise mehrere sekundäre Drehgelenke auf.

Bei dem erfindungsgemäßen Fahrrad handelt es sich insbesondere um ein vollgefedertes Mountainbike. Das Fahrrad weist einen erfindungsgemäßen Fahrradrahmen auf. Das Drehgelenk des Fahrradrahmens ist insbesondere derart verschiebbar und damit die Position des Drehpunkts änderbar, dass das Moment, das eine Kette des Fahrrads unter Tretlast auf den Hinterbau ausübt, verändert wird und damit den Anti-Squat des Fahrrads verändert.

Nachfolgend wird die Erfindung anhand bevorzugter Ausführungsformen unter Bezugnahme auf die anliegenden Zeichnungen näher erläutert.

Es zeigen:
- Fig. 1: eine seitliche Teilansicht auf eine Ausführungsform eines erfindungsgemäßen Fahrradrahmens,
- Fig. 2: eine Längsschnittdarstellung des im Sitzrohrs angeordneten Drehgelenks im Bereich II. aus Fig. 1,
- Fign. 3-4: perspektivische Detailansichten im Bereich II. aus Fig. 1 in verschiedenen Zuständen, und
- Fig. 5: ein Graph zur Darstellung des Anti-Squat bei unterschiedlichen Kettenrädern in zwei Positionen eines Drehgelenks.

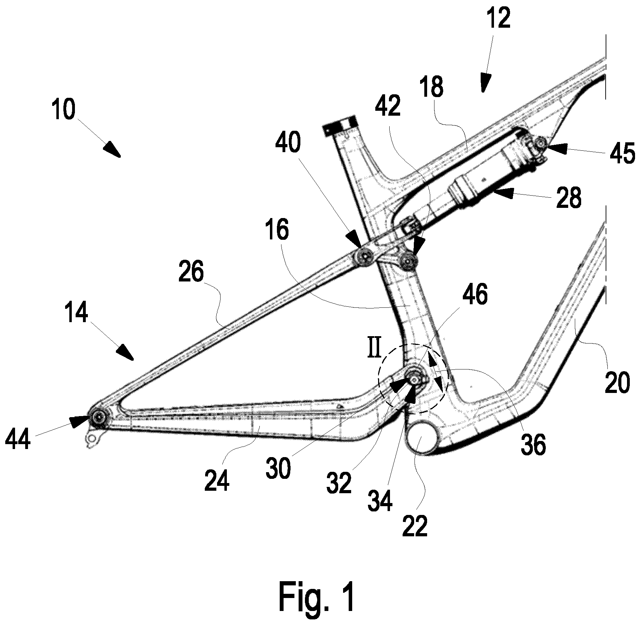

Figur 1 zeigt einen Teil eines erfindungsgemäßen Fahrradrahmens 10 mit einem Hauptrahmen 12 und einem Hinterbau 14.

Der Hauptrahmen 12 weist ein Oberrohr 18, ein Sitzrohr 16 und ein Unterrohr 20 auf.

Mittels eines mit dem Hauptrahmen 12 verbundenen Hauptdrehgelenks 30, auch Main Pivot genannt, mit einer Drehachse 32, auch Hauptdrehachse genannt, sowie vier sekundären Drehgelenken 40, 42, 44, 45 ist der Hinterbau 14 relativ zum Hauptrahmen 12 um den Hauptdrehpunkt 34 beweglich drehbar ausgeführt. Der Hauptdrehpunkt 34 liegt insbesondere deckungsgleich mit der Drehachse 32. Die sekundären Drehgelenke 40, 42, 44, 45 weisen insbesondere jeweils eine sekundäre Drehachse auf. Zur Federung der Bewegung zwischen Hauptrahmen 12 und Hinterbau 14 weist der Fahrradrahmen 10 eine zwischen Oberrohr 18 und der Sitzstrebe 26 des Hinterbaus 14 angeordnete Feder 28 auf.

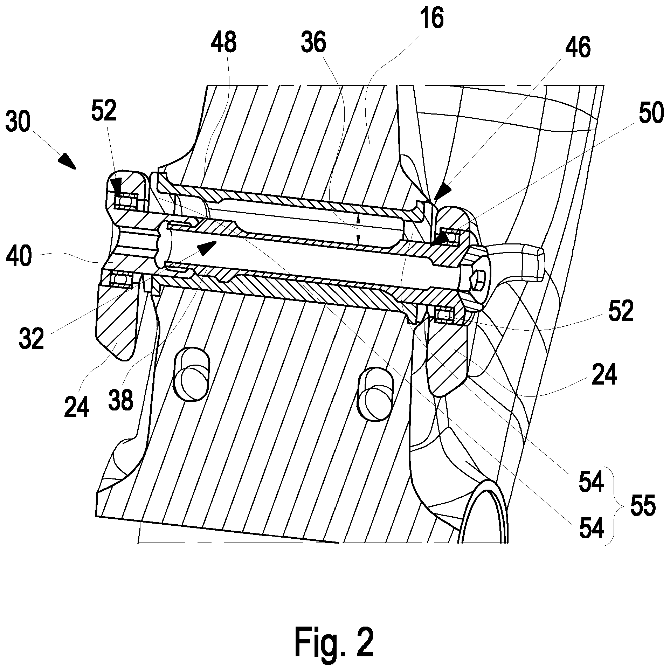

Das Hauptdrehgelenk 30 ist in einer, vorzugsweise als Bohrung im Sitzrohr 46 des Hauptrahmens 12 ausgeführten, Öffnung 46 (vgl. Fig. 2) im Sitzrohr 16 angeordnet und andererseits zur Umsetzung der Beweglichkeit drehbar mit der Kettenstrebe 24 des Hinterbaus 14 verbunden. Hierbei ist das Hauptdrehgelenk 30 translatorisch verschiebbar (dargestellt durch Pfeil 46), vorzugsweise in eine Höhenrichtung des Fahrradrahmens 10 und/oder in Erstreckungsrichtung des Sitzrohrs 16, innerhalb der Öffnung 46 angeordnet.

Wie in Figur 2 zu sehen ist die, einen verschraubt miteinander verbundenen Achskörper 38 und eine Achsmutter 40 aufweisende, Drehachse 32 verschiebbar innerhalb der Öffnung 46 angeordnet, insbesondere dadurch, dass die Öffnung 46 einen größeren Durchmesser als die Drehachse 32 aufweist. Bei der Öffnung 46 handelt es sich insbesondere um ein Langloch zur verschiebbaren Aufnahme der Drehachse 32.

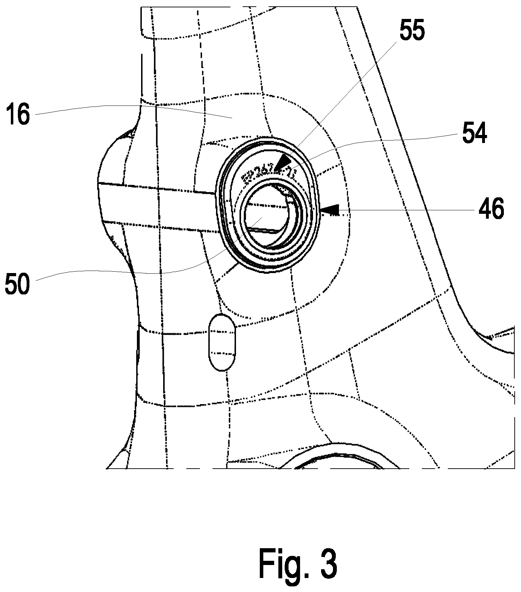

Figur 2 zeigt eine Anordnung der Drehachse 32 in einer ersten, insbesondere unteren, Position, wobei die Drehachse 32 (entlang Pfeil 46) nach oben verschoben werden kann. Zur Umsetzung der Verschiebbarkeit und insbesondere translatorischen Fixierung in verschiedenen Montagepositionen ist ein, zwei Flip-Chip-Elemente 54 aufweisender, Flip-Chip 55 in die Öffnung 46 eingesetzt, der eine Achsenaufnahme 50, insbesondere in Form einer Öffnung, zur Aufnahme der Drehachse 32 aufweist (vgl. Fign. 3-4).

Wie dargestellt ist es möglich, dass der Flip-Chip 55 über eine Drehlagerbuchse 48 in die Öffnung 46 eingesetzt ist. Anderseits ist bspw. auch ein direktes Einsetzen des Flip-Chips 55 in die Öffnung und/oder Verbindung mit dem Hauptrahmen 12 möglich. Die Beweglichkeit zwischen Hauptrahmen 12 und Hinterbau 14 ist über zwei zwischen Drehachse 32 und Kettenstrebe 24 angeordnete Wälzlager 52 umgesetzt.

Figur 3 zeigt den Flip-Chip 55 aus Figur 2 mit ausgeblendeter Drehachse 32, insbesondere mit ausgeblendetem Hauptdrehgelenk 30. Der Flip-Chip 55 befindet sich hierbei in der Position gemäß Figur 2, sodass über die Achsenaufnahme 50 eine Anordnung der Drehachse 32 in der unteren Position umgesetzt ist.

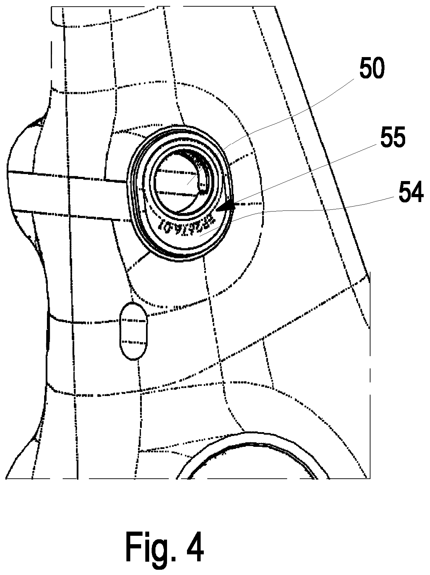

Zum Verschieben der Drehachse 32 und somit insbesondere des Drehgelenks 30 kann der Flip-Chip 55 verstellt, vorzugsweise gedreht und/oder umgesetzt werden. Figur 4 zeigt hierzu eine Anordnung des Flip-Chips 55 in einer zweiten, oberen Position. Somit kann durch dieses Verstellen des Flip-Chips 55 die Drehachse 32, und somit insbesondere das Hauptdrehgelenk 30, in eine zweite Position verschoben werden (vgl. Pfeil 46 in Fign. 1-2).

Durch das Verschieben der Drehachse 32 wird der Drehpunkt 34, insbesondere translatorisch, verschoben (vgl. Fig. 1). Hierdurch wird der Abstand des Drehpunkts 34 zu einer Tretlagerachse eines (nicht dargestellten) Tretlagers, das in dem Tretlagergehäuse 22 des Fahrradrahmens aufzunehmen ist, geändert. Durch diese Abstandsänderung erfolgt insbesondere vorteilhaft eine Anpassbarkeit des Anti-Squat, wobei es andererseits bevorzugt ist, dass diese Änderung keine Wesentlichen Auswirkungen auf die statische Geometrie, vorzugsweise im unbelasteten Zustand, bspw. bei 0% Federweg, des Fahrrads hat und/oder dies die Kurve des Federwegs und/oder des Bewegungsverhältnisses des Fahrrads nicht oder nur geringfügig beeinflusst. Es ist bspw. umgesetzt, dass die Drehachse 32 und/oder das Hauptdrehgelenk 30 von der unteren Position (gem. Fig. 3) zu der oberen Position (gem. Fig. 4) um 20 mm verschiebbar ist. Möglich ist andererseits (nicht dargestellt), bspw. eine Verschiebbarkeit von 1 mm bis 100 mm, bevorzugt von 3 bis 50 mm, besondere bevorzugt von 4 bis 30 mm.

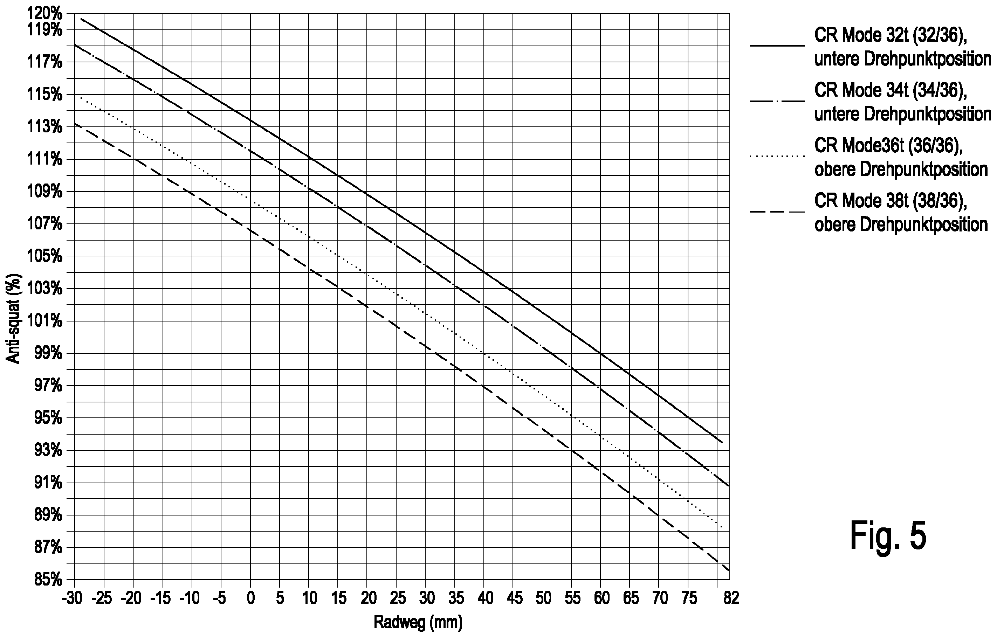

Figur 5 zeigt einen Graph zur Darstellung des Anti-Squat (in %) bezogen auf den vertikalen Radweg (in mm) bei unterschiedlichen Kettenrädern in den zwei Positionen des Drehgelenks 32 gemäß Figuren 3 und 4. Der Radweg von 0 bezieht sich auf die Fahrhöhe des Fahrrads oder den als "SAG"-Punkt bekannten Punkt.

Die oberste (durchgezogene) Kurve zeigt den Anti-Squat für ein Kettenrad mit einer Zähnezahl von 32 (Verhältnis 32/36), wobei sich das Drehgelenk 30 und somit der Drehpunkt 34 in der unteren Position, wie in Figur 3 dargestellt befindet.

Die zweite (Strichpunkt-) Kurve zeigt den Anti-Squat für ein Kettenrad mit einer Zähnezahl von 34 (Verhältnis 34/36), ebenfalls in der unteren Position gemäß Figur 3.

Die dritte (gepunktete) Kurve zeigt den Anti-Squat für ein Kettenrad mit einer Zähnezahl von 36 (Verhältnis 36/36), wobei sich das Drehgelenk 30 und somit der Drehpunkt 34 in der oberen Position, wie in Figur 4 dargestellt befindet.

Die unterste (gestrichelte) Kurve zeigt den Anti-Squat für ein Kettenrad mit einer Zähnezahl von 38 (Verhältnis 38/36), ebenfalls in der unteren Position gemäß Figur 4.

Dem Graph ist hierbei die Adaptierbarkeit des Anti-Squat, insbesondere bzgl. unterschiedlichen Kettenrädern, durch die Erfindung zu entnehmen.

## Patentansprüche

1. Fahrradrahmen (10), insbesondere vollgefederter Fahrradrahmen (10), mit
einem Hauptrahmen (12),
einem relativ zum Hauptrahmen (12) um einen Drehpunkt (34) beweglichen Hinterbau (14), und
einem den Drehpunkt (34) ausbildenden Drehgelenk (30),
wobei das Drehgelenk (30) zur Änderung der Position des Drehpunkts (34) verschiebbar ist.

2. Fahrradrahmen (10) nach Anspruch 1, **dadurch gekennzeichnet, dass** das Drehgelenk (30) translatorisch verschiebbar ist.

3. Fahrradrahmen (10) nach Anspruch 1 oder 2, **dadurch gekennzeichnet, dass** das Drehgelenk (30) relativ zum Hauptrahmen (12) verschiebbar ist.

4. Fahrradrahmen (10) nach einem der Ansprüche 1-3, **dadurch gekennzeichnet, dass** das Drehgelenk (30) in verschiedenen Positionen relativ zum Hauptrahmen (12), insbesondere translatorisch, fixierbar ist.

5. Fahrradrahmen (10) nach einem der Ansprüche 1-4, **dadurch gekennzeichnet, dass** das Drehgelenk (30) verschiebbar im Hauptrahmen (12) aufgenommen ist.

6. Fahrradrahmen (10) nach Anspruch 5, **dadurch gekennzeichnet, dass** der Hauptrahmen (12) eine Öffnung (46), insbesondere Bohrung, zur verschiebbaren Aufnahme des Drehgelenks (30) aufweist.

7. Fahrradrahmen (10) nach einem der Ansprüche 1-6, **dadurch gekennzeichnet, dass** das Drehgelenk (30) eine Drehachse (32) aufweist, wobei die Drehachse (32) verschiebbar ist.

8. Fahrradrahmen (10) nach einem der Ansprüche 1-7, **dadurch gekennzeichnet, dass** es sich bei dem Drehgelenk (30) um das Hauptdrehgelenk des Fahrradrahmens (10) und/oder dass es sich bei dem Drehpunkt (34) um den Hauptdrehpunkt des Fahrradrahmens (10) handelt.

9. Fahrradrahmen (10) nach einem der Ansprüche 1-8, **dadurch gekennzeichnet, dass** sich durch das Verschieben des Drehgelenks (30) der Abstand des Drehpunkts (34) zu einer Tretlagerachse des Fahrradrahmens (10) ändert.

10. Fahrradrahmen (10) nach einem der Ansprüche 1-9, **dadurch gekennzeichnet, dass** das Drehgelenk (30) entlang einer Gerade verschiebbar ist, die durch ein Tretlager des Fahrradrahmens (10), insbesondere eine Tretlagerachse des Tretlagers verläuft.

11. Fahrradrahmen (10) nach einem der Ansprüche 1-10, **dadurch gekennzeichnet, dass** das Drehgelenk (30) verschiebbar in zwei verschiedene Positionen oder in mehr als zwei verschiedene Positionen ist.

12. Fahrradrahmen (10) nach einem der Ansprüche 1-11, **dadurch gekennzeichnet, dass** der Fahrradrahmen (10) ferner einen Flip-Chip (55), insbesondere im Hauptrahmen (12), zum Verschieben des Drehgelenks (30) aufweist.

13. Fahrradrahmen (10) nach Anspruch 12, **dadurch gekennzeichnet, dass** der Flip-Chip (55) ausgeführt ist eine Drehachse (32) des Drehgelenks (30) zur Änderung der Position des Drehpunkts (34) in verschiedenen Positionen relativ zum Hauptrahmen (12) anzuordnen.

14. Fahrrad, insbesondere vollgefedertes Mountainbike, mit einem Fahrradrahmen (10) nach einem der Ansprüche 1 bis 13.
